Europäisches Patentamt

European Patent Office

Office européen des brevets

(19)

(11) Publication number: **0 078 680**
**B1**

# (12) EUROPEAN PATENT SPECIFICATION

(45) Date of publication of patent specification: **30.04.86**

(51) Int. Cl.⁴: **G 03 G 15/00**

(21) Application number: **82305769.0**

(22) Date of filing: **29.10.82**

(54) **Recirculating document handler.**

(30) Priority: **29.10.81 US 316209**
**30.10.81 US 316694**

(43) Date of publication of application:
**11.05.83 Bulletin 83/19**

(45) Publication of the grant of the patent:
**30.04.86 Bulletin 86/18**

(84) Designated Contracting States:
**DE GB**

(56) References cited:
**EP-A-0 021 514**
**US-A-3 615 129**
**US-A-4 066 252**
**US-A-4 158 500**
**US-A-4 176 945**
**US-A-4 179 215**
**US-A-4 187 024**
**US-A-4 229 101**
**US-A-4 238 126**
**US-A-4 284 270**

(73) Proprietor: **XEROX CORPORATION**
**Xerox Square - 020**
**Rochester New York 14644 (US)**

(72) Inventor: **Buddendeck, Mark H.**
**171 Bittersweet Drive**
**Macedon New York 14502 (US)**

(74) Representative: **Frain, Timothy John et al**
**c/o Rank Xerox Limited Patent Department**
**Rank Xerox House 338 Euston Road**
**London NW1 3BH (GB)**

## Description

The present invention relates to a circulating document handler for recirculating original document sheets from a stack thereof to an imaging station of a copier for copying with selected document recirculation loop paths depending on the copying mode selected, and in particular for providing such a document handling system with both immediate duplex and common side duplex precollation copying modes of operation.

Especially for the faster xerographic and other document copiers now in commercial use, it is increasingly desirable to provide for the automatic handling of the individual original document sheets being copied, in order to more fully utilize the higher copying speed capabilities of these copiers. It is particularly desirable to rapidly automatically feed, register and copy document sheets of a variety or mixture of sizes, types, weights, materials, conditions and susceptibility to damage, yet with minimal document jamming, wear or damage by the document handling apparatus. Yet it is also desirable that the document handling units be as compact, simple and lightweight as possible. This is especially desirable where, as conventionally practiced, the entire document handling unit is pivotally mounted over the existing copier platen to be liftable by the operator to facilitate alternative manual document placements on the platen.

A known desirable feature for an automatic document handling system for a copier is to provide document recirculations for precollation copying. Such precollation copying systems provide a number of important advantages. The copies exit the copier into a set collector already in precollated sets, and do not require subsequent sorting in a sorter or collator. On-line finishing and/or removal of completed copy sets may be provided while additional copy sets are being made from the same document set. Also, a complete copy proof set is available from the first document set circulation. Any desired number of such copy sets may be made by making a corresponding number of recirculations of the document set in collated order past a copying station and copying each document once each time it recirculates. Examples of such systems are further described in the patent literature cited hereinbelow.

However, a disadvantage of precollation copying systems is that the documents must all be repeatedly recirculated and repeatedly individually copied a number of times equivalent to the desired number of copy sets. For example, to make 10 copy sets of a 5 page document set or book, one copy at a time can be made of each of the 5 document pages in this order: pages 1, 2, 3, 4, 5; 1, 2, 3, 4, 5; (or the reverse page order) repeated a total of 10 times to make the desired 10 copy sets. Thus, increased document recirculations are necessitated for a precollation copying system, with consequent increased likelihood of document jams and document wear, image smearing, or damage, particularly if the document feeding paths are lengthy, interrupted, or excessively arcuate.

The type of document transport and registration system is affected by the type of copier optics, i.e., the copying system. In the known constant velocity transport (CVT) system a moving document is copied with a stationary optics system. The document sheet is fed by wheels or belts at a constant velocity over a narrow transparent scanning slit, window or platen of a copier. This is desirable for a small copier since the overall system can be much more compact. However, such a CVT system can also be combined into a copier also providing a full size stationary platen by using a part of the full platen to provide the CVT scanning slit. This has been used to provide for alternative CVT document "stream feeding", or for feeding documents which are larger than the platen, e.g., the Xerox "3100 LDC" copier (e.g., U.S. Patents Nos. 3,900,258 and 4,017,172).

It is generally preferable in such a CVT system to preregister the document to its transport just before the document is transported over the copying window. Examples are disclosed in the above patents or in U.S. Patent 3,536,320 issued October 27, 1970 to D. R. Derby.

In contrast, in many other copying systems or modes, the document is registered overlying a full document sized (full frame) platen, and either optically scanned by moving scanning optics while it is held stationary over the platen or optically stopped by flash illumination and imaging of the entire document when the document is driven by the document transport to the registration position over the platen.

Of particular interest as disclosing a recirculating document handler for a copier with a stack at one side of an imaging station and means for returning the document through alternative paths to the stack inverted or not inverted for common side duplex or simplex precollation copying, is U.S. Patent No. 4,238,126.

U.S. Patent No. 4 158 500 discloses a recirculating document handler with simplex and immediate duplex copying modes of operation as recited in the precharacterizing portion of present claim 1, but this reference does not teach a common duplex copying mode.

Conventional simple software instructions in the copier's general microprocessor logic circuitry and software of document handler and copier·control functions and logic, as taught by the above and other patents and various commercial copiers, are well known and preferred. However, it will be appreciated that the document feeding functions and controls described herein may be alternatively conventionally incorporated into a copier utilizing any other suitable or known simple software or hard wired logic systems, cam-bank switch controllers, etc. With the present system, both document feeding and copying thereof can be initiated simply by a known document lead edge detector switch actuated as the document sheet is being inserted. See, e.g., the above-cited U.S. Patent No. 4,132,401 issued January 2, 1979 to J. F. Gauranski et al. and the references cited therein.

The present invention overcomes or reduces various of the above-discussed problems. According to the present invention there is provided a recirculating document handler for plurality recirculating simplex or duplex documents sheets to and from a stack thereof to and from the imaging station of a copier for providing both simplex and duplex document sheet precollation copying, comprising plural-mode document recirculation loop path means and selectively movable path selector means in said plural-mode document recirculation loop path means for selecting partially different document recirculation loop paths therein for providing different selectable recirculative document copying modes, wherein in one said selected recirculation loop path and copying mode one side of duplex document sheets are copied at said imaging station and then said document sheets are immediately returned directly but inverted to the same imaging station for immediately copying the opposite sides thereof and thereafter returning these duplex document sheets to said stack in their original sheet orientation in said stack, to provide an immediate duplex document precollation copying mode in which both sides of all of said duplex documents are copied in each circulation of the duplex document set, and wherein in another said selected document recirculation loop path and copying mode simplex document sheets are recirculated and copied on only one side thereof and directly returned to said stack without inversion, characterised in that in a further said selected document recirculation loop path and copying mode duplex document sheets are copied on only one side at said imaging station and then directly returned to said stack inverted from their original orientation in said stack, before copying any of the opposite sides thereof, to provide a common side duplex document precollation copying mode in which all of only one side of the duplex documents are copied in each circulation of the duplex document set and the opposite sides thereof are copied in a subsequent set circulation.

Further features which may be provided by the recirculating document handler disclosed herein include those in which said document recirculatng loop path means provides a completed single inversion document recirculation loop path from and back to and over said imaging station in said immediate duplex copying mode, and provides a single inversion path from said imaging station back to said stack in said common side duplex precollation copying mode, or

in both said duplex document precollation copying modes the duplex document sheets are fed separately from the bottom of the stack of sheets in a stack support adjacent the side of said imaging station, fed by the same constant velocity transport means over a narrow scanning slit at said imaging station without inversion; and thereafter in said immediate duplex copying mode the duplex documents are then inverted once in a first inversion path and refed to said imaging station for copying the opposite side of the same sheet, and then fed back to the top of the stack of sheets in said stack support with one additional inversion in a second inversion path so that the sheet returns to the same stack in its same, original, orientation in said stack and may be refed to recopy both sides of the same sheet in the same page sequence;

and wherein in said common side duplex document copying mode the duplex document sheets are returned from the same imaging station inverted once through a return inversion path to the top of the stack in said stack support, so that the document sheets are inverted from their previous orientation in the stack and may be refed to the imaging station to recopy the opposite sides of the sheets in a different page sequence, or

the return path for a document sheet from said imaging station back to the top of the stack including said return inversion path in said common side duplex copying mode is the same as that for a document sheet in said immediate duplex copying mode after the second side has been copied, including said second inversion path.

In order that the invention may be better understood reference will now be made to the following description of a specific example thereof, with reference to the accompanying drawings, in which:—

Fig. 1 is a cross-sectional side view of an exemplary document handling apparatus in accordance with the present invention on an exemplary copier (partially shown); and

Fig. 2A—2D schematically show the document paths for four different modes of operation of the document handling unit of Fig. 1.

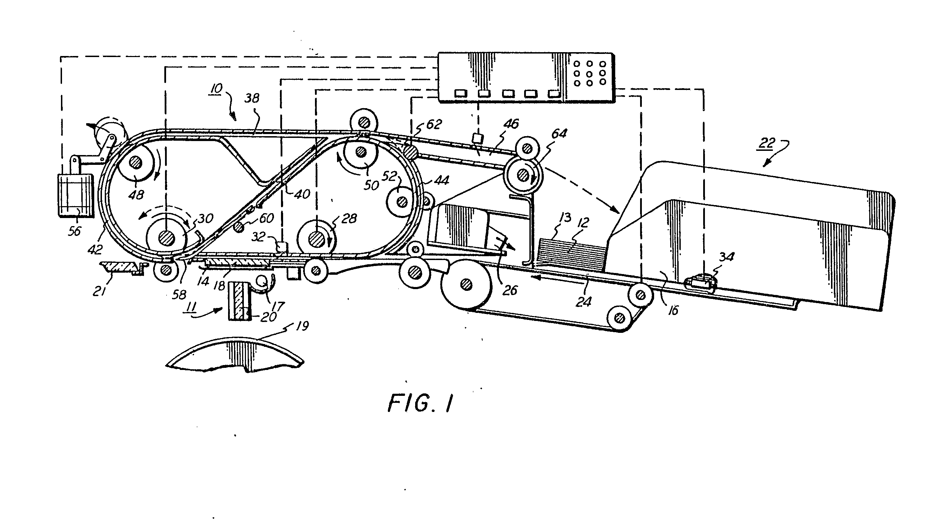

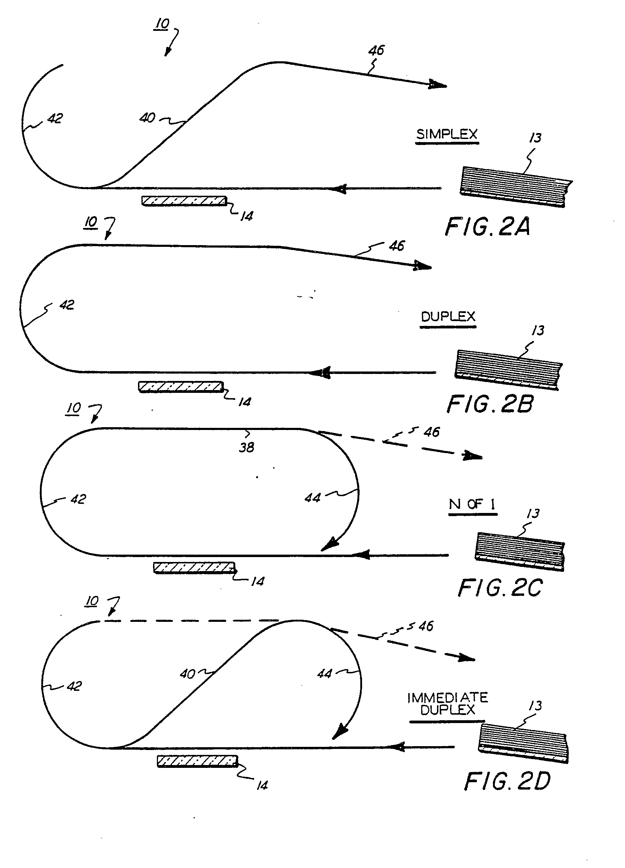

Referring to the embodiment of Fig. 1 and 2, an exemplary constant velocity transport (CVY) document handling unit 10 is mounted on an exemplary copier 11. The unit 10 feeds individual original document sheets 12 seriatim from the bottom of a stack 13 in a constant velocity movement path over the transparent copying window or platen 14 of the copier 11. The unit 10 also transports documents from the platen 14 back to the top of the stack 13. The stack 13 is in a stack holder or tray 16 adjacent one side of the platen 14. The documents are loaded face down and generally fed in 1-N or forward serial page order in a short and substantially linear path directly from the bottom of the stack 13 to the platen 14.

Since the copier 11 may be any of various known types such as those in the patents cited above, its example here is disclosed only to the extent of the document handler 10 optical interface therewith. Here each document sheet 12 is preferably conventionally exposed on the platen 14 by an illumination lamp 17 or lamps and a light reflector therefor under the platen. The flowing slit image of that portion of the document thus uniformly illuminated which is within an imaging or viewing area 18 (in a central portion of platen 14) is conventionally focused onto the copier photoreceptor 19 through a stationary lens 20. Here the lens 20 is a self-focusing linear optical fiber array as described, for example, in U.S. Patent No. 3,977,777. This flowing light image on the photoreceptor 19 may then be conventionally developed and transferred to a registered copy sheet, as further described in the above-cited references. As discussed above, the lamp 17 and lens 20 may be permanently fixed, or may be only temporarily locked in this position and otherwise movable to scan a full size platen contiguous or adjacent the imaging area 18. Here a portion (one edge) of such an adjacent full platen 21 is shown.

The side of the document parallel the direction of document motion may be initially registered against, and guided along, an edge guide 22 in the stack holder 16. The initial registration of the lead edge of document to the other (orthogonal) axis, an imaginary line transverse the direction of document motion, can be done in several ways. Here it is conventionally accomplished simply by aligning (abutting) the lead edge of the document sheet with sheet feed rollers, that is, against a plural roller transverse nip line. As discussed above, a document sheet lead edge detector switch may be activated as this is done to initiate the operation of both the document handler 10 and copier 11 in a known manner.

This initial separation and feed-in of each document sheet 12 from the stack 13 may be done by a corrugating vacuum belt bottom feeder 24 assisted by an air knife system 26, shown in U.S. Patent No. 4,284,270 issued August 18, 1981 to M. Silverberg, for example.

The transport 10 provides a CVT with no changes in driving velocity while the document is being driven over the optical scan slit 18. Here the constant velocity line nip from aligned rubber rolls 28 and mating idler rollers thereunder catches and drives the lead edge of the document upstream of (before) the document enters the scan slit 18. This nip drives the document over the scan slit 18. On the other side of the imaging area 18 is a similar set of equal speed rollers 30 which continue the document sheet movement until it is all imaged.

Switch 32, connected to the copier microprocessor controller 36, is activated by the document lead edge slightly before the document enters the imaging area 18. That, and/or paper path switches, including conventional set counter (bail) and stack sensor switches 34, may be used to initiate the operation of the copier as well as counting the number of documents copied. Switch 32 may also be used to sense the passage of the trail edge of the document through the imaging station for other controls, including the timing of document reversal in certain operating modes as described below.

Considering now the overall configuration of the document handling unit 10, it may be seen that other than the separable stack tray 16 and input feeder assembly 24, 26, the unit 10 comprises a very compact and short path racetrack or flattened oval looped path baffle and feeder unit. A complete or closed loop racetrack path 38 is provided enabling continuous recirculation of a sheet in one direction from and back to the imaging slit 18. It provides a total racetrack path length preferably less than twice the document sheet dimension in its feeding direction. The racetrack path 38 includes two 180° (semi-cylindrical) sheet inverting loop paths 42 and 44 at opposite ends of the racetrack. In addition to this outside or racetrack path 38 there is provided here a diagonal cross-path 40, internally bisecting and connecting with the outer racetrack path 38. The cross-path 40 connects between the bottom entrance of loop path 42 and the top entrance of loop path 44. Further an output (restack) path 46 from path 38 connects (at the opposite side of the top of path 44) with path 40. The path 42 here provides an integral inverter/return loop path in which the same, common, path 42 provides in certain copying modes a compact, curved, sheet reversing and non-inverting temporary storage chute for sheets fed in and out of one end thereof; and in other copying modes the same path 42 provides a non-reversing and inverting document path therethrough. All of these paths are short and interconnecting for rapid document circulation without requiring high velocity document movements. Further, all document sheet movements are gentle transitions, i.e., there are no undesirable sharply arcuate (small radius) turns or inversions in any of these document paths, even though the overall size of the unit is quite small.

The above-described paths and their associated feed rollers provide a recirculating document handler 10 for recirculating document sheets to and from the stack 12 thereof to and from the imaging station 18 of the copier 11 with a selection of document recirculation loop paths to provide a plurality of modes of operation, i.e., plural document circulation modes, as illustrated in Figs. 2A—2D. That is, different ones of interconnecting integral, short, document recirculation looped paths may be selected, and in different sequences, depending on the desired copying mode selected.

The overall document recirculating path unit 10 thus provides not only a completed contiguous oval document recirculation loop 38 directly over the imaging station 18, but also reversing means and an alternative transverse intersecting bypass path 40. It may be utilized for selectably recirculating a document sheet in the recirculation loop 38, or reversing a document sheet at one side 42 of the loop 38 and/or feeding it into the selectable bypass path 40 for recirculation through path 44 back to the imaging station 18, or ejection through path 46.

It will be noted that here the copier imaging station is only a narrow optical scanning slit underlying only a minor portion of the document recirculation loop path 38, adjacent the one end 42 thereof. Further, the document feeding wheels 28, 30 for feeding document sheets over the imaging station at a constant speed for imaging same are also an integral part of, and provide part of the sheet movement in, the recirculation path 38.

With the exception of only feed rollers 30 when they reverse in the operating modes in which sheet movement reversal there is selected, all of the other document feeding rollers disclosed in unit 10 may be commonly and unidirectionally driven. Here this includes rollers 28, rollers 48 (at the upper end of loop path 42) rollers 50 (at the top of paths 40 and 44 and the entrance to path 46) and rollers 52 (centrally of path 44). All these rollers are within less than one sheet length (or width) of one another so that a sheet is constantly engaged by at least one set of driven rollers and its mating idler rollers. The exception is rollers 48. There its idler rollers 54 are engageable and disengageable by a solenoid 56. When the document is to be reversed in path 42, where path 42 is serving as a compact reversing (non-inverting) chute, then the solenoid 56 is temporarily actuated to open the nip with driven rollers 48 and allow slippage (non-engagement) with the document sheet. That allows the reversal of rollers 30 to reverse the direction of document motion unobstructedly. Here that reversal, when selected, occurs after the trail edge of the document has passed a pivotable deflector gate 58. This is an automatic one-way gate. It allows document sheets to feed in one direction from the imaging station 18 into the loop path 42 by the lead edge of the document deflecting the gate 58 up out of the way. However, on the reversed movement of the document sheet from the loop path 42 back towards the imaging station 18, the sheet is automatically deflected up into the entrance of bypass document path 40 (leading away from the imaging station) by the upper surface of gate 58, which has dropped down into the sheet path (its illustrated solid line position). This automatic one-way deflection gate 58 is gravity operated, i.e., gate 58 swings down about its pivot axis 60 into said deflecting position except when it is pushed up by a sheet passing thereunder from the imaging station 18.

At the opposite (downstream) end of bypass path 40 (and also in the loop 38 portion connecting between the upper (downstream) end of path 42 and the entrance to path 44) is a solenoid actuable two-way pivotable gate 62. The gate 62, if left down in the solid line position shown, causes sheets fed out from the downstream ends of either of paths 42 or 40 to be deflected into output path 46 and thereby restacked on stack 13, via the higher speed restack ejector rollers 64 in path 46. In contrast, when gate 62 is raised to its illustrated dashed-line position it deflects all sheets down into return loop path 44 leading directly back to the imaging station 18 with an inversion, via registration and feeding rollers 28, for recopying of the same sheet. However, whether the same side of the same sheet is so copied depends on whether the sheet was fed to path 44 by returning *through* path 42, or was *reversed* in path 42 and returned through path 40 instead. The former (as in Fig. 2C) return provides two sheet inversions (in paths 42 and 44) for recopying the same side of a document, whereas the latter (as in Fig. 2D) return to the imaging station provides only one inversion (in path 44) for copying the opposite side of the document.

Referring now particularly to Figs. 2A through 2D, these illustrate schematically the document sheet paths for four different selectable modes of operation of the document handling unit 11. (These and additional copying modes and their respective advantages are further described in the above-cited patents.)

Respectively, as so labeled, Fig. 2A illustrates a mode of operation for pre-collation of a set or stack of simplex (one-sided) original document sheets. Fig. 2B illustrates one mode of pre-collation copying of a set of duplex (two-sided) document sheets. (See, e.g., above cited 4,229,101 for further copying details.)

Fig. 2C illustrates a known mode of making N (any selected plural number of) copies in direct sequence by the repeated circulation of a single document fed manually (or one document at a time) fed from a stack by the same feeder. In the latter case this will produce non-collated copies. In the case of a single document, there is, of course, no difference between pre-collation and post-collation copying, i.e., no collation is required. Thus, such immediate and direct recirculating loop copying of a single document is preferable, to as opposed to returning the document back to the stack support and back for each copy. This Fig. 2C mode can be automatically selected by the tray set counter and sensor switch detecting that there is only a single document present in the document tray. The dashed line in Fig. 2C indicates the return or ejection of the document after the desired number of recirculation loops (solid line) has been completed.

Fig. 2D illustrates another mode of pre-collation copying of a set of duplex document sheets. This copying mode is known as immediate duplex (see, e.g., above cited 4,176,945 or 4,158,500 for further copying details) in that the first and second sides of each document sheet are copied immediately one after the other, rather than all of the first sides of each sheet in the whole set being copied at a time and then all of the other sides being copied, as in the Fig. 2B mode. In the Fig. 2D mode each document is reversed after copying one side and inverted and immediately returned to the imaging station for copying the second side (as shown in the solid lines) and then returned (as shown in the dashed line) to the tray for restacking.

Heretofore, the selection between a stack circulation duplex pre-collation mode, as in Fig. 2B, and an immediate duplex mode, such as in Fig. 2D, has not been practically achievable in a single integral document handler because of the different document paths required and the difficulty of providing such paths with appropriately short yet sufficiently large radius inversion loops so that the document handler can keep up with the copying rate of the copier and yet provide acceptable feeding with sufficiently low jam rates, and jam clearance accessibility of the document transport.

In that regard it will be noted that the increased selectivity of operating modes provided with the document handling unit 10 also provides increased job recovery capabilities. For example, in the event of a document jam during copying, instead of recycling through the entire document set back to the particular document to be recopied for job recovery, the document to be recopied may be directly recycled in the Fig. 2C or Fig. 2D path modes to make an additional copy therefrom. That is, certain of the illustrated copying modes, even though not normally utilized for copying with a particular copier processor, may be specially utilized in the event of a document jam for making up additional copy sheets which are needed to complete incomplete copy sets, i.e., to replace sheets removed from the copier during the job recovery (jam clearance).

It may be seen that the selection of any of the above-described modes of operation, and others, can be accomplished, as exemplified here, simply by the actuation or non-actuation of the deflector gate 62 and the reversal or non-reversal of the feed wheels 30 (together with the actuation of the solenoid 56). This selection can provide for the alternatives of returning the document sheet through selected loop paths directly back to the copying station, either inverted or not inverted, or further alternatively returning the document sheet directly back to the top of the stack 13, again, either inverted or not inverted, after copying only one side thereof, or after having copied both sides thereof, and after copying the document sheet once, or after the document sheet has been copied a plural number of times. Thus it may be seen that further and additional copying modes and/or job recovery modes are available in addition to those disclosed in Figs. 2A through 2D.

Note, for example, that the Fig. 2B copying mode with its single natural inversion on path 42, will leave the stack 13 of documents inverted at the end of an odd number of document set circulations. By automatically switching to the Fig. 2A copying mode for the last document set circulation that can be avoided, i.e., the documents will restack in their initial orientation (face down).

**Claims**

1. A recirculating document handler (10) for plurally recirculating simplex or duplex document sheets (12) to and from a stack (13) thereof to and from the imaging station (18) of a copier for providing both simplex and duplex document sheet precollation copying, comprising plural-mode document recirculation loop path (38, 40) means and selectively movable path selector means (58, 62) in said plural-mode document recirculation loop path means for selecting partially different document recirculation loop paths therein for providing different selectable recirculative document copying modes, wherein in one said selected recirculation loop path (42, 40, 44) and copying mode one side of duplex document sheets are copied at said imaging station (18) and then said document sheets are immediately returned directly but inverted to the same imaging station for immediately copying the opposite sides thereof and thereafter returning these duplex document sheets to said stack (13) in their original sheet orientation in said stack, to provide an immediate duplex document precollation copying mode in which both sides of all of said duplex documents are copied in each circulation of the duplex document set, and wherein in another said selected document recirculation loop path (42, 40, 46) and copying mode simplex document sheets are recirculated and copied on only one side thereof and directly returned to said stack (13) without inversion, characterised in that in a further said selected document recirculation loop path (42, 38, 46) and copying mode duplex document sheets are copied on only one side at said imaging station (18) and then directly returned to said stack (13) inverted from their original orientation in said stack before copying any of the opposite sides thereof, to provide a common side duplex document precollation copying mode in which all of only one side of the duplex documents are copied in each circulation of the duplex document set and the opposite sides thereof are copied in a subsequent set circulation.

2. The recirculating document handler of Claim 1 in which said document recirculating loop path means (38, 40) provides a completed single inversion document recirculation loop path (42, 40, 44) from and back to and over said imaging station (18) in said immediate duplex copying mode, and provides a single inversion path (42, 46) from said imaging station back to said stack (13) in said common side duplex precollation copying mode.

3. The recirculating document handler according to Claim 1 or 2, in which in both said duplex document precollation copying modes the duplex document sheets (12) are fed separately from the bottom of the stack (13) of sheets in a stack support (16) adjacent the side of said imaging station (18), fed by the same constant velocity transport means (28) over a narrow scanning slit at said imaging station (18) without inversion.

4. A recirculating document handler according to Claim 3, wherein in the immediate duplex copying mode the duplex documents are then inverted once in a first inversion path (42, 40, 44) before being refed to said imaging station for copying the opposite side of the same sheet, and then fed back to the top of the stack (13) of sheets in said stack support with one additional inversion in a second inversion path (42, 46) so that the sheet (12) returns to the same stack in its same, original, orientation in said stack and may be refed to recopy both sides of the same sheet in the same page sequence;

and wherein in said common side duplex document copying mode the duplex document sheets are returned from the same imaging station (18) inverted once through a return inversion path (42, 46) to the top of the stack in said stack support, so that the document sheets (12) are inverted from their previous orientation in the stack (13) and may be refed to the imaging station (18) to recopy the opposite sides of the sheets in a different page sequence.

5. A recirculating document handler according to Claim 4, in which the return path for a document sheet from said imaging station (18) back to the top of the stack (13) including said return inversion path (42, 46) in said common side duplex copying mode is the same as that for a document sheet in said immediate duplex copying mode after the second side has been copied, including said second inversion path (42, 46).

6. A recirculating document handler according to Claim 5, in which said plural-mode document recirculation loop path means (38, 40) includes an oval loop recirculation path (38) over said imaging station, and includes means for selectably feeding document sheet into and out of said oval loop recirculation path after at least partial circulation therein, and further includes an additional S-shaped document recirculation path (42, 40, 44), which S-shaped path is within said oval loop recirculation path (38) and partially in common therewith and returns documents to said imaging station (18) for copying the opposite sides thereof.

7. A recirculating document handler according to Claim 6 in which said integral plural-mode document recirculation loop path means (38, 40) includes an integral inverter/return loop document path (42) common to both said oval loop path (38) and said S-shaped path (42, 40, 44) which inverter/return loop path (42) provides a document sheet reversing and non-inverting temporary storage chute in at least one said copying mode and provides a non-reversing and inverting document return path therethrough in at least one other said copying mode.

8. A recirculating document handler according to Claim 7, in which said inverter/return loop document path (42) is an integral one side of said oval document recirculation loop (38) and includes selectively reversible sheet feed means (30);

and in which said document recirculation loop path means (38, 40) further includes an alternative transverse loop-intersecting bypass path (40) communicating with the entrance of said inverter/return loop path (42), said bypass path (40) forming a central portion of said S-shaped path (42, 40, 44),

and wherein a document sheet may be selectively unidirectionally fed through said inverter/return loop path (42) or reversed in said inverter/return loop path by said reversible sheet feed means (30) and fed into said bypass path (40).

9. A recirculating document handler according to Claim 8, in which said inverter/return loop path (42) also includes automatic one-way deflection gate means (58) for allowing document sheets to feed in one direction from said imaging station (18) into said inverter/return loop path (42) but automatically causing reverse movement document sheets fed from said inverter/return loop path (42) back towards said imaging station (18) to be deflected into said bypass path (40), said automatic one-way deflection gate means (58) preferably being normally closed by gravity and deflectable by the lead edge of a document sheet.

10. A recirculating document handler according to Claim 8 or 9, in which said bypass path (40) connects at one end thereof with one end of said inverter/return loop path (42), and connects at the opposite end with both a further return loop path (44) for returning document sheets directly to said imaging station and with an output path (46) for returning documents to said stack, and wherein said selector means (62) are provided for selecting between said further return loop path (44) and said output path (46) by guiding a document sheet from said bypass path (40) into a selected one of said other paths.

**Revendications**

1. Manipulateur de document avec remise en circulation (10) pour remettre plusieurs fois en circulation des feuilles de document à une face ou à double face (12) vers une pile (13) de feuilles ou à partir de celle-ci dans la direction d'un poste d'imagerie (18) ou à partir de celui-ci dans une machine de reproduction afin de fournir une reproduction avec pré-assemblage des feuilles de document à une face et à double face, comprenant un moyen de trajet en boucle (38, 40) pour remise en circulation de document suivant plusieurs modes, et un moyen de sélecteur de trajet (58, 62) mobile de manière sélective dans le moyen de trajet en boucle pour remise en circulation de document suivant plusieurs modes pour sélectionner des trajets en boucle pour remise en circulation de document partiellement différents afin de fournir des modes différents de reproduction de document pouvant être sélectionnés avec remise en circulation, où dans un trajet sélectionné (42, 40, 44) en boucle pour remise en circulation et mode de reproduction, un côté des feuilles de document à double face est reproduit au poste d'imagerie (18), puis les feuilles de document sont renvoyées immédiatement directement mais inversées à ce même poste d'imagerie pour reproduction immédiate de leur côté opposé et ensuite pour renvoi de ces feuilles de document à double face à la pile (13) dans leur orientation originale des feuilles dans la pile, afin de fournir un mode de reproduction immédiate avec pré-assemblage de documents à double face dans lequel les deux côtés de la totalité des documents à double face est reproduite dans chaque circulation du jeu de documents à double face, et où dans un autre trajet sélectionné (42, 40, 46) en boucle pour remise en circulation de document et mode de reproduction, des feuilles de document à une face sont remises en circulation et reproduites sur un côté seulement et renvoyées directement à la pile (13) sans inversion, caractérisé en ce que dans un autre trajet sélectionné (42, 38, 46) en boucle pour remise en circulation de document et mode de reproduction, des feuilles de document à double face sont reproduites sur un côté seulement au poste d'imagerie (18), puis renvoyées directement à la pile (13) en étant inversées par rapport à leur orientation originale dans la pile, avant reproduction de l'une quelconque de leurs côtés opposés, afin de fournir un mode de reproduction avec pré-assemblage de documents à double face à côté commun dans lequel la totalité d'un côté seulement des documents à double face est reproduite dans chaque circulation du jeu de documents à double face et les côtés opposés sont reproduits dans une circulation ultérieure du jeu.

2. Manipulateur de document avec remise en circulation selon la revendication 1 dans lequel le moyen de trajet en boucle (38, 40) pour remise en circulation de documents fournit un trajet complet en boucle (42, 40, 44) pour remise en circulation de document avec une seule inversion à partir du poste d'imagerie (18) et retour à ce poste et passage au-dessus de ce poste dans le mode de reproduction immédiate à double face, et fournit un trajet à inversion unique (42, 46) à partir du poste d'imagerie pour retour à la pile (13) dans le mode de reproduction avec pré-assemblage à double face à côté commun.

3. Manipulateur de document avec remise en circulation selon la revendication 1 ou 2, dans lequel dans les deux modes de reproduction avec pré-assemblage de document à double face, les feuilles de document à double face (12) sont introduites séparément à partir du fond de la pile de feuilles (13) dans un support (16) de pile contigu au côté du poste d'imagerie (18), introduites par le même moyen de transport à vitesse constante (28) sur une fente étroite de balayage au poste d'imagerie (18) sans inversion.

4. Manipulateur de document avec remise en circulation selon la revendication 3, où dans un mode de reproduction à double face immédiat, les documents à double face sont alors inversés une fois dans un premier trajet d'inversion (42, 40, 44) avant d'être réintroduits dans le poste d'imagerie pour reproduction du côté opposé de la même feuille, puis ramenés au sommet de la pile de feuilles (13) dans le support de pile avec une inversion supplémentaire dans un second trajet d'inversion (42, 46) de sorte que la feuille (12) revient à la même pile dans la même orientation originale dans la pile, et peut être réintroduite pour reproduire les deux côtés de la même feuille dans la même séquence des pages;

— et où dans le mode de reproduction de document à double face à côté commun, les feuilles de document à double face sont renvoyées du même poste d'imagerie (18) en étant inversées une fois par l'intermédiaire du trajet de retour à inversion (42, 46) jusqu'au sommet de la pile dans le support de pile, de sorte que les feuilles de document (12) sont inversées par rapport à leur orientation antérieure dans la pile (13) et peuvent être réintroduites dans le poste d'imagerie (18) pour reproduire les côtés opposés des feuilles dans une séquence différente des pages.

5. Manipulateur de document avec remise en circulation selon la revendication 4, dans lequel le trajet de retour pour une feuille de document provenant du poste d'imagerie (18) et revenant au sommet de la pile (13) comportant le trajet de retour à inversion (42, 46) dans le mode de reproduction à double face à côté commun est le même que pour une feuille de document dans le mode de reproduction immédiate à deux faces après que le second côté ait été reproduit, comprenant le second trajet d'inversion (42, 46).

6. Manipulateur de document avec remise en circulation selon la revendication 5, dans lequel le moyen de trajet en boucle (38, 40) pour remise en circulation de document à modes multiples comporte un trajet de remise en circulation en boucle ovale (38) au-dessus du poste d'imagerie, et comprend un moyen pour introduire de façon sélective une feuille de document afin de la faire entrer dans le trajet de remise pour circulation en boucle ovale et l'en faire sortir après au moins une circulation partielle dans ce trajet, et comprend en outre un trajet supplémentaire (42, 40, 44) pour remise en circulation de document en forme de S, trajet en forme de S qui se trouve à l'intérieur du trajet (38) pour remise en circulation en boucle ovale et est partiellement en commun avec celui-ci et renvoie les documents au poste d'imagerie (18) pour reproduction de leurs côtés opposés.

7. Manipulateur de document avec remise en circulation selon la revendication 6, dans lequel le moyen de trajet intégral (38, 40) en boucle pour remise en circulation de document à modes multiples comprend un trajet intégral (42) pour document en boucle de retour/inverseur commun au trajet (38) en boucle ovale et au trajet (42, 40, 44) en forme de S, trajet (42) en boucle de retour/inverseur qui fournit une goulotte de stockage temporaire à changement de sens de feuille de document et sans inversion dans au moins un des modes de reproduction et fournit un trajet de retour de document sans changement de sens et avec inversion dans au moins un autre des modes de reproduction.

8. Manipulateur de document avec remise en circulation selon la revendication 7, dans lequel le trajet (42) de document en boucle d'inversion/retour est un côté intégral de la boucle ovale (38) pour remise en circulation de document et comporte un moyen (30) d'introduction de feuilles sélectivement réversible;

et dans lequel le moyen de trajet (38, 40) en boucle pour remise en circulation de document comporte en outre un trajet de contournement (40) transversal en variante coupant la boucle qui communique avec l'entrée du trajet (42) en boucle d'inversion/retour, ce trajet de contournement (40) constituant une partie centrale du trajet (42, 40, 44) en forme de S;

et où une feuille de document peut être introduite sélectivement de façon uni-directionnelle par l'intermédiaire du trajet (42) en boucle d'inversion/retour ou changée de sens dans le trajet en boucle d'inversion/retour par le moyen (30) d'alimentation en feuilles réversible et introduites dans le trajet de contournement (40).

9. Manipulateur de document avec remise en circulation selon la revendication 8, dans lequel le trajet (42) en boucle d'inversion/retour comprend également un moyen de porte (58) automatique de déviation dans un sens pour permettre aux feuilles de document d'être introduites dans une direction à partir du poste d'imagerie (18) afin d'entrer dans le trajet (42) en boucle d'inversion/-retour mais ayant pour fonction que les feuilles de documents à mouvement en sens inverse provenant du trajet (42) en boucle d'inversion/retour et revenant vers le poste d'imagerie (18) soient déviées pour entrer dans le trajet de contournement (40), le moyen de porte (58) automatique de déviation dans un sens étant normalement fermé de préférence par gravité et pouvant être dévié par le bord avant d'une feuille de document.

10. Manipulateur de document avec remise en circulation selon la revendication 8 ou 9, dans lequel le trajet de contournement (40) est relié à l'une de ses extrémités à une extrémité du trajet (42) en boucle d'inversion/retour et à son extrémité opposée à l'autre trajet (44) en boucle de retour pour renvoyer directement les feuilles de document au poste d'imagerie ainsi qu'à un trajet de sortie (46) pour renvoyer les documents à la pile et où le moyen de sélecteur (62) est prévu pour faire une sélection entre l'autre trajet (44) en boucle de retour et le trajet de sortie (46) en guidant une feuille de document à partir du trajet de contournement (40) pour lui faire suivre un trajet sélectionné parmi les autres trajets.

**Patentansprüche**

1.    Umlauf-Schriftstück-Handhabungsvorrichtung (10) für den Mehrfachumlauf von einseitigen oder doppelseitigen Schriftstückblättern (12) von und bis zu einem Stapel (13) von Schriftstückblättern von und bis zu der Abbildungsstation (18) eines Kopiergerätes zum Kopieren mit Vorsortierung von sowohl einseitigen als auch doppelseitigen Schriftstückblättern, mit einer Mehrfachmodus-Schriftstück-Umlaufschleifenbahn (38, 40)-Einrichtung und einer wahlweise bewegbaren Bahnwählereinrichtung (58, 62) in der genannten Mehrfachmodus-Schriftstück-Umlaufschleifenbahneinrichtung zum Wählen von darin ausgebildeten teilweise unterschiedlichen Schriftstück-Umlaufschleifenbahnen zum Bestimmen von verschiedenen, auswählbaren Schriftstückumlaufkopiermodi, wobei in einer gewählten Umlaufschleifenbahn (42, 40, 44) und einem Kopiermodus eine Seite von doppelseitigen Schriftstückblättern an der genannten Abbildungsstation (18) kopiert wird und dann die genannten Schriftstückblätter direkt, jedoch gewendet, unmittelbar zur gleichen Abbildungsstation zum unmittelbaren Kopieren deren gegenüberliegenden Seiten zurückgeführt und anschließend diese doppelseitigen Schriftstückblätter zum genannten Stapel (13) in ihrer ursprünglichen Blattorientierung im genannten Stapel zurückgeführt werden, um einen Direkt-Kopiermodus mit Vorsortierung für doppelseitige Schriftstücke festzulegen, in welchem beide Seiten sämtlicher genannten doppelseitigen Schriftstücke bei jedem Umlauf des Satzes doppelseitiger Schriftstücke kopiert werden, und wobei in einer anderen gewählten Schriftstück-Umlaufschleifenbahn (42, 40, 46) und einem Kopiermodus einseitige Schriftstückblätter zirkuliert und auf lediglich einer Seite kopiert und, ohne gewendet zu werden, direkt zum genannten Stapel (13) zurückgeführt werden, dadurch gekennzeichnet, daß in einer weiteren gewählten Schriftstück-Umlaufschleifenbahn (42, 38, 46) und einem Kopiermodus doppelseitige Schriftstückblätter an der genannten Abbildungsstation (18) auf lediglich einer Seite kopiert und dann, bevor irgendeine ihrer gegenüberliegenden Seiten kopiert wird, direkt zum genannten Stapel (13), gegenüber ihrer ursprünglichen Orientierung im genannten Stapel gewendet, zurückgeführt werden, um einen Gemeinsamseiten-Kopiermodus mit Vorsortierung für doppelseitige Schriftstücke festzulegen, in welchem jeweils lediglich eine Seite der doppelseitigen Schriftstücke bei jedem Umlauf des Satzes doppelseitiger Schriftstücke und deren gegenüberliegende Seiten während eines nachfolgenden Satz-Umlaufes kopiert werden.

2.    Umlauf-Schriftstück-Handhabungsvorrichtung nach Anspruch 1, in welcher die genannte Schriftstück-Umlaufschleifenbahn-Einrichtung (38, 40) eine vollständige Einfachwende-Schriftstück-Umlaufschleifenbahn (42, 40, 44) von und zurück zur und über der genannten Abbildungsstation (18) in dem genannten Direkt-Kopiermodus für doppelseitige Schriftstücke sowie eine Einfachwende-Bahn (42, 46) von der genannten Abbildungsstation zurück zum genannten Stapel (13) in dem genannten Gemeinsamseiten-Kopiermodus mit Vorsortierung für doppelseitige Schriftstücke bereitstellt.

3.    Umlauf-Schriftstück-Handhabungsvorrichtung nach Anspruch 1 oder 2, in welcher in beiden genannten Kopiermodi mit Vorsortierung für doppelseitige Schriftstücke die doppelseitigen Schriftstückblätter (12) getrennt vom Boden des in einer Stapelhalterung (16) angrenzend an der Seite der genannten Abbildungsstation (18) befindlichen Blattstapels (13) mittels der gleichen Transporteinrichtung (28) konstanter Geschwindigkeit, ohne gewendet zu werden, über einen schmalen Abtastschlitz an der genannten Abbildungsstation (18) zugeführt werden.

4.    Umlauf-Schriftstück-Handhabungsvorrichtung nach Anspruch 3, in welcher in dem Direkt-Kopiermodus für doppelseitige Schriftstücke die doppelseitigen Schriftstücke sodann in einer ersten Wendebahn (42, 40, 44) vor der Rückfuhrung zur genannten Abbildungsstation zum Kopieren der gegenüberliegenden Seite des gleichen Blattes einmal gewendet und sodann mit einem zusätzlichen Wenden in einer zweiten Wendebahn (42, 46) zur Oberseite des Blattstapels (13) in der genannten Stapelhalterung zurücktransportiert werden, so daß das Blatt (12) in seiner gleichen, ursprünglichen Orientierung im genannten Stapel zum gleichen Stapel zurückgeführt wird und erneut zugeführt werden kann, um beide Seiten des gleichen Blattes in der gleichen Schriftstückseiten-Reihenfolge nochmals zu kopieren;

und in welcher Vorrichtung in dem genannten Gemeinsamseiten-Kopiermodus für doppelseitige Schriftstücke die doppelseitigen Schriftstückblätter von der gleichen Abbildungsstation (18) einmal gewendet durch eine Rückführungswendebahn (42, 46) zur Oberseite des Stapels in der genannten Stapelhalterung zurückgeführt werden, so daß die Schriftstückblätter (12 gegenüber ihrer vorherigen Orientierung im Stapel (13) gewendet sind und erneut der Abbildungsstation (18) zugeführt werden können, um die gegenüberliegenden Seiten der Blätter in einer anderen Schriftstückseiten-Reihenfolge zu kopieren.

5. Umlauf-Schriftstück-Handhabungsvorrichtung nach Anspruch 4, in welcher die Rückführungsbahn für ein Schriftstückblatt von der genannten Abbildungsstation (18) zurück zur Oberseite des Stapels (13) einschließlich der genannten Rückführungs-Wendebahn (42, 46) in dem genannten Gemeinsamseiten-Kopiermodus für doppelseitige Schriftstücke die gleiche ist wie diejenige einschließlich der genannten zweiten Rückführungsbahn (42, 46), die ein Schriftstückblatt in dem genannten Direkt-Kopiermodus für doppelseitige Schriftstücke nach dem Kopieren der zweiten Seite zurücklegt.

6. Umlauf-Schriftstück-Handhabungsvorrichtung nach Anspruch 5, in welcher die genannte Mehrfachmodus-Schriftstück-Umlaufschleifenbahneinrichtung (38, 40) eine ovale Schleifenumlaufbahn (38) über der genannten Abbildungsstation und eine Einrichtung zum wahlweisen Transport von Schriftstückblättern hinein in die genannte ovale Schleifenumlaufbahn und heraus aus derselben nach wenigstens einem Teilumlauf in derselben sowie ferner eine zusätzliche S-förmige Schriftstück-Umlaufbahn (42, 40, 44) umfaßt, welche S-förmige Bahn innerhalb der genannten ovalen Schleifenumlaufbahn (38) angeordnet und teilweise gemeinsam mit derselben ausgebildet ist und Schriftstücke zum Kopieren deren gegenüberliegenden Seiten zur genannten Abbildungsstation zurückführt.

7. Umlauf-Schriftstück-Handhabungsvorrichtung nach Anspruch 6, in welcher die genannte integrale Mehrfachmodus-Schriftstück-Umlaufschleifenbahneinrichtung (38, 40) eine integrale Schriftstück-Wende/Rückführungs-Schleifenbahn (42) aufweist, die sowohl der genannten ovalen Schleifenbahn (38) als auch der genannten S-förmigen Bahn (42, 40, 44) gemeinsam ist und eine Schriftstück-Rücklauf- und Nichtwende-Bahn vorübergehender Speicherung in wenigstens einem Kopiermodus sowie eine Nichtrücklauf- und Wende/Rückführungsbahn in wenigstens einem anderen Kopiermodus festlegt.

8. Umlauf-Schriftstück-Handhabungsvorrichtung nach Anspruch 7, in welcher die genannte Wende/Rückführungs-Schleifenbahn (42) eine integrale Seite der genannten ovalen Schriftstück-Schleifenumlaufbahn (38) ist und eine wahlweise umkehrbare Blatt-Transporteinrichtung (30) aufweist;

und in welcher die genannte Schriftstück-Umlaufschleifenbahneinrichtung (38, 40) ferner eine alternative querverlaufende Schleifen-Kreuzungs-Umleitungsbahn (40) aufweist, die mit dem Einlaß der genannten Wende/Rückführungs-Schleifenbahn (42) in Verbindung steht und einen zentralen Teil der genannten S-förmigen Bahn (42, 40, 44) bildet;

und in welcher ein Schriftstückblatt wahlweise in einer Richtung durch die genannte Wende/Rückführungs-Schleifenbahn (42) transportiert oder mittels der genannten umkehrbaren Blatt-Transporteinrichtung (30) in der genannten Wende/Rückführungs-Schleifenbahn in die entgegengesetzte Richtung umgekehrt und in die genannte Umleitungsbahn (40) hineintransportiert werden kann.

9. Umlauf-Schriftstück-Handhabungsvorrichtung nach Anspruch 8, in welcher die genannte Wende/Rückführungsschleifenbahn (42) auch eine automatische Einweg-Ablenk-Sperreinrichtung (58) umfaßt, die es ermöglicht, Schriftstückblätter von der genannten Abbildungsstation (18) in einer Richtung in die genannte Wende/Rückführungs-Schleifenbahn (42) hineinzutransportieren, die jedoch automatisch bewirkt, daß die von der genannten Wende/Rückführungs-Schleifenbahn (42) in Richtung zur genannten Abbildungsstation (18) mit entgegengesetzter Bewegung rückgeführten Schriftstückblätter in die genannte Umleitungsbahn (40) hinein abgelenkt werden, wobei die genannte automatische Einweg-Ablenk-Sperreinrichtung (58) vorzugsweise normal durch die Schwerkraft geschlossen wird und durch die vorlaufende Kante eines Schriftstückblattes ablenkbar ist.

10. Umlauf-Schriftstück-Handhabungsvorrichtung nach Anspruch 8 oder 9, in welcher die genannte Umleitungsbahn (40) mit einem Ende mit einem Ende der genannten Wende/Rückführungs-Schleifenbahn (42) und mit dem entgegengesetzten Ende sowohl mit einer weiteren Rückführungs-Schleifenbahn (44) zur Rückführung von Schriftstückblättern direkt zur genannten Abbildungsstation als auch mit einer Auslaßbahn (46) zur Rückführung von Schriftstücken zum genannten Stapel verbunden ist, und in welcher die genannte Wählereinrichtung (62) vorgesehen ist, zwischen der genannten weiteren Rückführungs-Schleifenbahn (44) und der genannten Auslaßbahn (46) durch Führen eines Schriftstückblattes von der genannten Umleitungsbahn (40) hinein in eine gewählte Bahn der genannten anderen Bahnen zu wählen.

FIG. I

0 078 680

FIG.2A

FIG.2B

FIG.2C

FIG.2D